## Europäisches Patentamt

## European Patent Office

## Office européen des brevets

(19)

(11) Veröffentlichungsnummer: **0 040 623**
**B1**

(12)

# EUROPÄISCHE PATENTSCHRIFT

(45) Veröffentlichungstag der Patentschrift:
**10.08.83**

(21) Anmeldenummer: **80902278.3**

(22) Anmeldetag: **28.11.80**

(86) Internationale Anmeldenummer:
**PCT/DE 80/00178**

(87) Internationale Veröffentlichungsnummer:
**WO 81/01497 (11.06.81 Gazette 81/14)**

(51) Int. Cl.³: **A 23 N 7/01**

(54) **DREHBAR GELAGERTER DRUCKBEHÄLTER.**

(30) Priorität: **30.11.79 DE 2948360**

(43) Veröffentlichungstag der Anmeldung:
**02.12.81 Patentblatt 81/48**

(45) Bekanntmachung des Hinweises auf die Patenterteilung:
**10.08.83 Patentblatt 83/32**

(84) Benannte Vertragsstaaten:
**AT CH DE FR GB LI NL SE**

(56) Entgegenhaltungen:
**DE-A-2 032 796**
**DE-A-2 443 295**
**DE-A-2 641 350**
**DE-C-905 564**

(73) Patentinhaber: **KUNZ, Paul, Deishardstrasse 3,
D-5419 Döttesfeld (DE)**

(72) Erfinder: **KUNZ, Paul, Deishardstrasse 3,
D-5419 Döttesfeld (DE)**

(74) Vertreter: **Prüfer, Lutz H., Dipl.-Phys.,
Willroiderstrasse 8, D-8000 München 90 (DE)**

ACTORUM AG

Drehbar gelagerter Druckbehälter

Die Erfindung betrifft einen drehbar gelagerten Druckbehälter mit einer Einfüllöffnung, einem diese verschliessenden Deckel und einer diesen bewegenden Einrichtung, einer Zuführung für das Zuführen eines Mediums zum Herausspülen von im Druckbehälter befindlicher Luft, einer Zuführung zum Zuführen des eigentlichen Druckmediums, und einer Steuereinrichtung, die beim Beaufschlagen des Druckbehälters mit Druckmedium zunächst die Zuführung des Mediums zum Herausspülen der Luft und dann die Zuführung des eigentlichen Druckmediums einschaltet.

Ein solcher Druckbehälter ist aus der DE-A-26 41 350 bekannt. Der Deckel ist von einer ausserhalb des Druckbehälters angeordneten Einrichtung verschliessbar. Die zugehörige Steuerung ist so ausgebildet, dass sie in Abhängigkeit vom zeitlichen Ablauf zunächst einen unter niedrigerem Druck stehenden Dampf zuführt, um die im Druckbehälterinneren befindliche Luft herauszuspülen. Nach einer vorgegebenen Zeit wird die Zufuhr des unter dem Arbeitsdruck stehenden Druckmediums eingeschaltet. Bei einer solchen Vorrichtung ist nicht auszuschliessen, dass das Einschalten der Zuführung des unter hohem Druck stehenden Druckmediums auch dann erfolgen kann, wenn der Deckel nicht oder nicht vollständig geschlossen ist. Im Hinblick darauf, dass bei solchen Druckbehältern mit Drücken bis 15 atü und mehr gearbeitet wird, stellt eine solche Möglichkeit eine latente Gefahr dar. Aus der DE-C-905 564 ist eine Betätigungsvorrichtung für Druckbehälter bekannt, die so ausgerichtet ist, dass das Gefäss nur unter Druck gesetzt werden kann, wenn es durch den Deckel richtig verschlossen ist.

Aufgabe der vorliegenden Erfindung ist es, einen Druckbehälter der eingangs beschriebenen Art zu schaffen, bei dem schon vor dem Verschliessen Medium zum Herausspülen der im Behälter befindlichen Luft zugeführt wird und bei dem sichergestellt ist, dass das eigentliche Druckmedium erst zugeführt wird, wenn der Deckel sicher verschlossen ist.

Diese Aufgabe wird durch einen Druckbehälter der eingangs beschriebenen Art gelöst, der gemäss der Erfindung dadurch gekennzeichnet ist, dass eine den Druck im Druckbehälterinneren messende Druckmesseinrichtung vorgesehen ist, deren Ausgangssignal der Steuereinrichtung zuführbar ist, und die Steuereinrichtung so ausgebildet ist, dass die Zuführung des eigentlichen Druckmediums nur dann eingeschaltet wird, wenn im Druckbehälterinneren ein vorgegebener Druck erreicht ist.

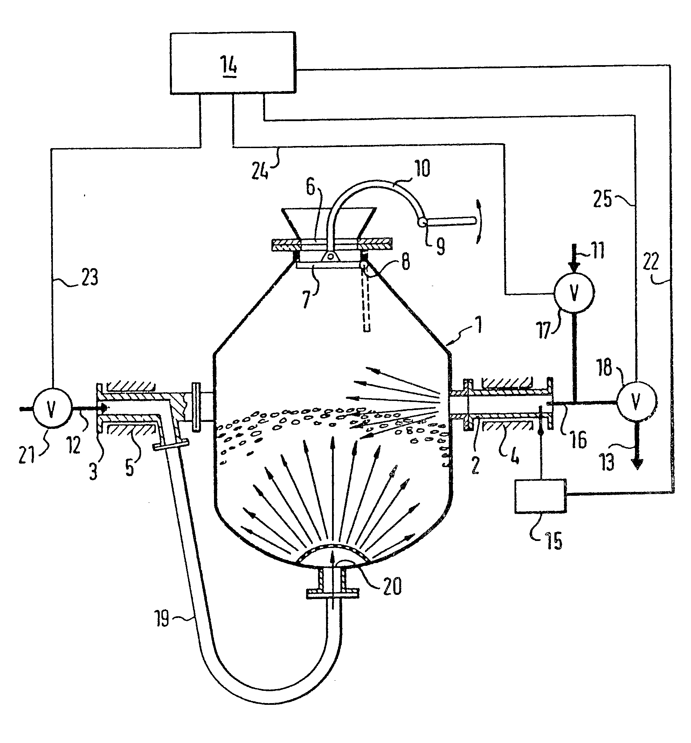

Die Erfindung wird anhand von Ausführungsbeispielen unter Bezug auf die Figur beschrieben.

Die Figur zeigt einen Querschnitt durch den Druckbehälter mit der schematisch dargestellten Steuereinrichtung.

Der Druckbehälter 1 ist um seine Querachse mittels an den Druckbehälter angeflanschter Wellen 2, 3 in Lagern 4, 5 drehbar gelagert. An der Einfüllöffnung 6 ist an der Innenseite ein Deckel 7 um ein Lager 8 schwenkbar angeordnet vorgesehen. Der Deckel 7 wird über einen an einer Drehachse 9 gelagerten Hebel 10 in die dargestellte geschlossene Stellung bzw. die gestrichelt gezeigte geöffnete Stellung hin- und herbewegt. Die Schwenkbewegung des Hebels kann beispielsweise mittels einer doppelt wirkenden Kolbenzylindereinrichtung erfolgen. Das diese betätigende Fluidmedium und das dem Druckbehälter zuzuführende Druckmedium werden getrennt zugeführt.

Die Welle 2 ist mit einer sich nicht mit dem Druckbehälter mitdrehenden Leitung 16 verbunden, welche in einem nicht gezeigten Gleitlager innerhalb der Welle 2 gelagert ist und in bekannter Weise beispielsweise durch Stopfbüchse oder Simmering abgedichtet ist. Diese feststehende Leitung ist über ein Ventil 17 mit einer ersten Zuführungsleitung 11 und über ein Ventil 18 mit einer zum Belüften dienenden Abführleitung 13 verbindbar. Die Welle 3 nimmt eine sich mit dem Druckbehälter nicht mitdrehende zweite Zuführungsleitung 12 auf, die wiederum in einem Gleitlager innerhalb der Welle 3 gelagert und durch Stopfbüchse oder Simmering u.a. abgedichtet ist. Das Innere der Hohlwelle 3 ist über eine Leitung 19, die einerseits an der Welle 3 und andererseits an einem im Bodenbereich des Druckbehälters vorgesehenen Flansch angeflanscht ist, mit einer Öffnung 20 im Bodenbereich des Druckbehälters 1 verbunden. Das Öffnen und Schliessen der zweiten Zuführungsleitung 12 erfolgt über ein Ventil 21.

An der Welle 2 ist eine Druckmesseinrichtung 15 vorgesehen, die über das Innere der Welle den im Druckbehälter 1 herrschenden Druck angibt. Ihr Ausgangssignal wird über eine Leitung 22 dem Eingang einer Steuereinrichtung 14 zugeführt, deren Ausgänge über Leitungen 23, 24, 25 mit den Ventilen 21, 17 und 18 verbunden sind.

Die Querschnitte von Zuführungsleitung 12, dem Inneren der Welle 3 und Leitung 19 sind sehr viel kleiner als die Querschnitte der ersten Zuführungsleitung 11 und des Inneren der Welle 2. Die Zuführungsleitung 12 ist mit der das Druckmedium liefernden Quelle verbunden, so dass das über diese Leitung zugeführte Druckmedium wegen des kleineren Rohrquerschnittes im Druckbehälterinneren zunächst einen viel kleineren Druck hat als der Arbeitsdruck des über die erste Zuführungsleitung 11 zugeführten Druckmediums.

In einem bevorzugten Ausführungsbeispiel beträgt der Durchmesser der Zuführungsleitung 12 und/oder der Leitung 19 30 mm, der der Zuführungsleitung 11 125 mm und der der Einfüllöffnung 6 400 mm.

Ein oben beschriebener Druckbehälter findet insbesondere bei Dampfschälern Anwendung. Der Arbeitsdruck liegt bei solchen Dampfschälern in der Grössenordnung von 10 bis 15 atü. Der über die Zuführungsleitung 12 zugeführte Dampf hat wegen der Entspannung infolge Volumensvergrösserung beim Eintreten in den Druckbehälter in diesem zunächst einen wesentlich niedrigeren Druck, beispielsweise 1 atü. Mit dem Dampf wird die im Druckbehälter befindliche Luft herausgespült. Nach dem Herausspülen der Luft wird der Druckbehälter hermetisch verschlossen, und es wird für den eigentlichen Schälvorgang durch Zuführen des Dampfes über die Zuführungsleitung 11 der Arbeitsdruck im Druckbehälter schnell aufgebaut.

In einer abgewandelten Ausführungsform wird der über die zweite Zuführungsleitung 12 zugeführte Dampf mit einem wesentlich niedrigeren Druck als dem Arbeitsdruck, in einem Beispiel mit 1 atü, zugeführt. Zu diesem Zweck ist beispielsweise eine Drosselstelle zwischen Druckquelle und Druckbehälter vorgesehen. In diesem Ausführungsbeispiel ist es nicht erforderlich, dass die erste Zuführungsleitung 11 und die zweite Zuführungsleitung 12 und/oder die Leitung 19 unterschiedliche Querschnitte aufweisen.

In den obigen Ausführungsbeispielen erfolgt die Zuführung über zwei getrennte Leitungen 11, 12. Es ist aber auch möglich, die Zuführung über eine einzige Leitung mit einer geeigneten Einrichtung zum Verändern des Querschnittes vorzunehmen. Die Zuführung des Mediums zum Herausspülen von im Druckbehälter befindlicher Luft erfolgt bei einem kleineren Querschnitt, und die Zuführung des eigentlichen Druckmediums erfolgt bei dem grossen Querschnitt der Zuführungsleitung. Die Querschnittsleitung kann beispielsweise durch einen Schieber erfolgen.

Die Steuerung 14 ist nun so aufgebaut, dass sie zunächst das Ventil 21 öffnet, wobei das Ventil 17 geschlossen ist und das Ventil 18 wahlweise geschlossen oder über einen kurzen Anfangszeitraum noch geöffnet sein kann. Nachdem das Ventil 18 über eine vorgegebene Zeit geschlossen und Dampf über eine vorgegebene Zeit über die Zuführungsleitung 12 zugeführt ist, baut sich bei geschlossenem Deckel 7 im Druckbehälterinneren ein Druck auf, der dem in der Steuerung 14 voreingestellten Druckwert entspricht. Nach Erreichen dieses Druckes liefert die Druckmesseinrichtung 15 ein Signal an die Steuereinrichtung 14, die dann das Ventil 17 öffnet, wobei das Ventil 21 gleichzeitig geschlossen werden kann. Jetzt wird der endgültige Arbeitsdruck im Druckbehälter aufgebaut.

Ist dagegen der Deckel 7 schon in der ersten Phase, in der das Ventil 17 noch geschlossen und das Ventil 21 geöffnet ist, nicht geschlossen, so wird der vorgegebene Druckwert im Druckbehälterinneren nicht erreicht, da sich der Dampf nach Austritt aus der Öffnung 20 in den Druckbehälter und über die Einfüllöffnung 6 nach aussen entspannt, insbesondere auch deshalb, weil der Querschnitt im Druckbehälterinneren und auch der Querschnitt der Einfüllöffnung wesentlich grösser ist als der Querschnitt der Leitung 19. Wird der voreingestellte Druckwert nicht erreicht, so wird auf jeden Fall das Ventil 17 nicht geöffnet, so dass ein Austreten des unter hohem Druck stehenden Dampfes vermieden wird. Gemäss einer besonders bevorzugten Ausführungsform der Steuerung schaltet diese bei Nichterreichen des vorgegebenen Druckwertes nach einer vorbestimmten Zeit des Zuführens von Dampf über die Zuführungsleitung 12 automatisch ab, so dass der Zyklus von neuem beginnt oder aber die Fehlerquelle für das Nichtschliessen des Deckels 7 gesucht werden kann.

Bei dem Ausführungsbeispiel, bei dem die Zuführung zum Spülen und zum eigentlichen Schälen über eine einzige Leitung erfolgt, ist die Steuerung 14 so aufgebaut, dass sie zunächst das Ventil für die Zuführungsleitung öffnet, wobei der Leitungsquerschnitt durch die Einrichtung reduziert ist. Das Ventil 18 ist wiederum wahlweise geschlossen oder über einen kurzen Anfangszeitraum noch geöffnet. Nachdem das Ventil 18 über eine vorgegebene Zeit geschlossen und der Dampf über die Zuführungsleitung zugeführt ist, baut sich bei geschlossenem Deckel 7 wiederum im Druckbehälterinneren ein Druck auf, der dem in der Steuerung 14 voreingestellten Druckwert entspricht. Nach Erreichen dieses Druckes und Liefern des Ausgangssignals von der Druckmesseinrichtung an die Steuereinrichtung 14 wird dann der Schieber geöffnet, so dass sich jetzt der endgültige Arbeitsdruck im Druckbehälter aufbaut. Wird dagegen der voreingestellte Druck nicht erreicht, so gibt die Steuerung 14 kein Signal zur Vergrösserung des Leitungsquerschnittes ab, so dass die Zuführung über die Leitung mit grossem Querschnitt vermieden wird.

In einer Weiterbildung der Erfindung ist die Steuereinrichtung so ausgebildet, dass diese auch die Rotation des Druckbehälters nur freigibt, wenn vorher das Ausgangssignal der Druckmesseinrichtung 15 das Erreichen des vorgewählten Druckes anzeigt. Der oben beschriebene Druckbehälter wird bevorzugt beispielsweise bei Dampfschälern oder auch Druckkochern verwendet. Seine Anwendung ist aber nicht auf diese Bereiche beschränkt.

**Patentansprüche**

1. Drehbar gelagerter Druckbehälter (1) mit einer Einfüllöffnung (6), einem diese verschliessenden Deckel (7) und einer diesen bewegenden Einrichtung (10), einer Zuführung (12, 19) für das Zuführen eines Mediums zum Herausspülen von im Druckbehälter (1) befindlicher Luft, einer Zuführung (2, 16) zum Zuführen des eigentlichen Druckmediums, und einer Steuereinrichtung (14), die beim Beaufschlagen des Druckbehälters (1) mit Druckmedium zunächst die Zuführung (12, 19) des Mediums zum Herausspülen der Luft und dann die Zuführung (2, 16) des eigentlichen Druckmediums einschaltet, dadurch gekennzeichnet, dass eine den Druck im Druckbehälterinneren messende Druckmesseinrichtung (15) vorgesehen ist, deren Ausgangssignal der Steuereinrichtung (14) zuführbar ist, und die Steuereinrichtung (14) so ausgebildet ist, dass die Zuführung des eigentlichen Druckmediums nur dann eingeschaltet wird, wenn im Druckbehälterinneren ein vorgegebener Druck erreicht ist.

2. Drehbar gelagerter Druckbehälter nach Anspruch 1, gekennzeichnet durch eine zweite, das Medium zum Herausspülen zuführende Zuführungsleitung (12, 19) und eine erste, das eigentliche Druckmedium zuführende Zuführungsleitung (2, 16).

3. Drehbar gelagerter Druckbehälter nach Anspruch 2, dadurch gekennzeichnet, dass der Querschnitt der zweiten Zuführungsleitung (12, 19) wesentlich kleiner als der der ersten Zuführungsleitung (2, 16) ist.

4. Drehbar gelagerter Druckbehälter nach Anspruch 3, dadurch gekennzeichnet, dass das Druckmedium über die zweite Zuführungsleitung (12, 19) an eine Druckquelle mit wesentlich geringerem Druck als dem Arbeitsdruck angeschlossen ist oder dass in der zweiten Zuführungsleitung (12, 19) zwischen Druckquelle und Druckbehälter (1) eine Drosselstelle vorgesehen ist.

5. Drehbar gelagerter Druckbehälter nach einem der Ansprüche 1–4, dadurch gekennzeichnet, dass die Steuereinrichtung (14) so ausgebildet ist, dass sie die Rotation des Druckbehälters (1) nur freigibt, wenn vorher das Ausgangssignal der Druckmesseinrichtung (15) das Erreichen des vorgewählten Druckes anzeigt.

## Claims

1. Rotatably supported pressure vessel (1) having a feed opening (6), a cover (7) closing said feed opening and means (10) for operating said cover, supply means (12, 19) for supplying a medium for expelling residual air within the pressure vessel (1), supply means (2, 16) for supplying the actual pressure medium and control means (14), which on admitting pressure medium to the pressure vessel (1) first actuates the supply means (12, 19) for the medium for expelling the air and subsequently the supply means (2, 16) for the actual pressure medium, characterized in that pressure measuring means (15) are provided measuring the pressure within the interior of the pressure vessel, the output signal of which may be fed to the control means (14), and in that the control means (14) is designed such that the supply of the actual pressure medium is actuated only in case a predetermined pressure is attained within the interior of the pressure vessel.

2. Rotatably supported pressure vessel according to claim 1, characterized by a second supply conduct (12, 19) supplying the expelling medium and a first supply conduct (2, 16) supplying the actual pressure medium.

3. Rotatably supported pressure vessel according to claim 2, characterized in that the cross-sectional area of the second supply conduct (12, 19) is significantly smaller than that of the first supply conduct (2, 16).

4. Rotatably supported pressure vessel according to claim 3, characterized in that the pressure medium is connected by means of the second supply conduct (12, 19) with a pressure source having a substantially lower pressure than the operating pressure or that a throttle means is provided in the second supply conduct (12, 19) between the pressure source and the pressure vessel (1).

5. Rotatably supported pressure vessel according to one of the claims 1 to 4, characterized in that the control means (14) is designed such that it enables the rotation of the pressure vessel (1) only in case the output signal of the pressure measuring means (15) previously indicates that the pre-selected pressure has been attained.

## Revendications

1. Récipient à pression (1) monté sur pivot rotatif, muni d'une ouverture de remplissage (6), d'un couvercle (7) fermant celle-ci et d'un dispositif (10) déplaçant ce couvercle, d'une amenée (12, 19) servant à amener un fluide pour éliminer par balayage l'air qui se trouve dans le récipient à pression (1), d'une amenée (2, 16) servant à amener le fluide sous pression proprement dit et d'un dispositif de commande (14) qui, lorsqu'on alimente le récipient à pression (1) en fluide sous pression, met en action tout d'abord l'amenée (12, 19) du fluide servant à éliminer l'air par balayage et ensuite l'amenée (2, 16) du fluide sous pression proprement dit, caractérisé en ce qu'il comporte un dispositif de mesure de pression (15) mesurant la pression à l'intérieur du récipient à pression et dont le signal de sortie peut être amené au dispositif de commande (14) et que le dispositif de commande (14) est conçu de telle sorte que l'amenée du fluide sous pression proprement dit est seulement mise en action lorsqu'une pression prescrite est atteinte à l'intérieur du récipient à pression.

2. Récipient à pression monté sur pivot rotatif selon la revendication 1, caractérisé par un deuxième tuyau d'amenée (12, 19) amenant le fluide servant à l'élimination par balayage et un premier tuyau d'amenée (2, 16) amenant le fluide sous pression proprement dit.

3. Récipient à pression monté sur pivot rotatif selon la revendication 2, caractérisé en ce que la section du deuxième tuyau d'amenée (12, 19) est notablement plus petite que celle du premier tuyau d'amenée (2, 16).

4. Récipient à pression monté sur pivot rotatif selon la revendication 3, caractérisé en ce que le fluide sous pression est raccordé, par l'intermédiaire du deuxième tuyau d'amenée (12, 19), à une source de pression ayant une pression notablement inférieure à la pression de travail ou par le fait que dans le deuxième tuyau d'amenée (12, 19), un point d'étranglement est prévu entre la source de pression et le récipient à pression (1).

5. Récipient à pression monté sur pivot rotatif selon l'une des revendications 1 à 4, caractérisé en ce que le dispositif de commande (14) est conçu de telle sorte qu'il libère seulement la rotation du récipient à pression (1) si, auparavant, le signal de sortie du dispositif de mesure de pression (15) indique que la pression choisie à l'avance est atteinte.